(19) Europäisches Patentamt
European Patent Office
Office européen des brevets

(11) EP 1 312 659 A1

(12) **EUROPEAN PATENT APPLICATION**
published in accordance with Art. 158(3) EPC

(43) Date of publication:
**21.05.2003 Bulletin 2003/21**

(21) Application number: **01955712.3**

(22) Date of filing: **14.08.2001**

(51) Int Cl.[7]: **C09J 183/14**, C09J 183/07, C09J 183/05, C09J 185/00, G02B 3/00, G02B 6/26, G02B 6/30, G02B 7/00, C03C 27/10

(86) International application number:
**PCT/JP01/07015**

(87) International publication number:
**WO 02/014451 (21.02.2002 Gazette 2002/08)**

(84) Designated Contracting States:
**AT BE CH CY DE DK ES FI FR GB GR IE IT LI LU MC NL PT SE TR**

(30) Priority: **17.08.2000 JP 2000247201**
**13.09.2000 JP 2000277995**

(71) Applicant: **Nippon Sheet Glass Co., Ltd.**
**Osaka-shi, Osaka 541-0041 (JP)**

(72) Inventors:
- **NAKAMURA, Koichiro**
**Nippon Sheet Glass Co, Ltd.**
**Osaka 541-0041 (JP)**
- **HORI, Masahiro Nippon Sheet Glass Co., Ltd.**
**Osaka 541-0045 (JP)**
- **YAMAMOTO, Hiroaki**
**Nippon Sheet Glass Co., Ltd.**
**Osaka-shi, Osaka 541-0041 (JP)**

(74) Representative: **Cresswell, Thomas Anthony**
**J.A. KEMP & CO.**
**14 South Square**
**Gray's Inn**
**London WC1R 5JJ (GB)**

(54) **ADHESIVE COMPOSITION AND OPTICAL DEVICE USING THE SAME**

(57) An optical device constructed by bonding together optical parts by an adhesive layer which has excellent heat resistance, suppresses the generation of bubbles at the time of curing and eliminates a defect such as clouding caused by bubbles.

This optical device is constructed by bonding together at least two optically transparent optical parts by an optically transparent adhesive layer. This adhesive layer comprises a matrix containing oxygen atoms and at least one type of network forming atoms selected from the group consisting of silicon, titanium, zirconium, aluminum and germanium, at least a part of the metal atoms is bonded to other metal atom(s) through a polyvalent hydrocarbon group having 2 to 8 carbon atoms and directly bonded to a monovalent hydrocarbon group such as alkyl group, and the contents of the above metal atom, polyvalent hydrocarbon group and monovalent hydrocarbon group are adjusted to ensure that the refractive index value of the adhesive layer should approximate to the refractive index values of the at least two optically transparent optical parts. There is also provided an adhesive composition for forming the above adhesive layer.



Printed by Jouve, 75001 PARIS (FR)

## Description

Field of the Invention

The present invention relates to an optical device constructed by bonding together optical parts by an optically transparent adhesive material and an adhesive composition for forming the same.

Prior Art

Technologies for increasing communication capacity have been becoming more and more important due to the popularization of the Internet. Bonding technologies used for the assembly of optical parts and optical elements used in these optical fiber communication systems must have high reliability and such characteristic properties as the precise adjustment of refractive index (for connecting optical paths), precise position accuracy (for bonding lenses) and high heat resistance (soldering heat resistance and heat resistance at the time of vacuum film formation). Soldering, laser welding and organic adhesives such as acrylic and epoxy resins have been used or adhesives made from organic-inorganic composite materials prepared by a sol-gel method have been proposed to assemble optical parts. A fluorinated or sulfur-containing epoxy adhesive and epoxy acrylic adhesive are proposed in (i) Proceedings of the 48th ECTC, pp. 1178 to 1185, 1998. Further, organic and inorganic adhesives prepared by a sold-gel method are described in (ii) Journal of Non-Crystalline Solids, vol. 80, pp. 557-563, 1986 and (iii) Intl. Congr. On Glass, pp. 429 to 436, 1986. An optical element using a sold-gel adhesive made from an alkoxide and a metal salt is disclosed by (iv) Japanese Patent No. 1829914 (JP-A62-297369) and a prism using an adhesive made from a silicic acid salt and an alkoxide is disclosed by (v) Japanese Patent No. 2786996. Further, an optical element using an organic-inorganic composite adhesive, for example, an adhesive obtained by hydrolyzing a sol comprising a polydimethylsiloxane, methyltriethoxysilane and phenyltrifluorosilane is disclosed by (vi) USP 5991493. However, the above bonding technologies and adhesives for optical parts have the following problems.

The soldering and laser welding are unsatisfactory in terms of fixing position accuracy and require a laser light source and advanced technologies. The epoxy adhesive and acrylic adhesive (i) are inferior in heat resistance of 250° C or more (soldering heat resistance). As for the adhesives made from an alkoxide and a metal salt (ii to vi), the cohesive failure of the adhesive layer readily occurs, the adhesive strength of the adhesive layer is not sufficient, and an alcohol formed by hydrolysis or water formed by dehydration is gasified during curing by heating, whereby bubbles remain by bonding together optical parts such as lenses, the adhesive becomes cloudy, or sufficient adhesion cannot be obtained.

Summary of the Invention

It is an object of the present invention to provide an optical device constructed by bonding together optical parts by an adhesive layer of an adhesive composition which overcomes the above problems, has high adhesive strength and excellent heat resistance, suppresses the generation of bubbles at the time of curing and eliminates a defect such as clouding caused by bubbles.

It is another object of the present invention to provide an adhesive composition having the above characteristic properties and advantageously used in the optical device of the present invention.

Other objects and advantages of the present invention will become apparent from the following description.

According to the present invention, firstly, the above objects and advantages of the present invention are attained by an optical device constructed by bonding together at least two optically transparent optical parts by an optically transparent adhesive layer, wherein the adhesive layer comprises a matrix containing oxygen atoms and at least one type of metal atoms selected from the group consisting of silicon, titanium, zirconium, aluminum and germanium, at least a part of the metal atoms is bonded to other metal atom through a polyvalent hydrocarbon group having 2 to 8 carbon atoms and directly bonded to at least one monovalent hydrocarbon group selected from the group consisting of alkyl group, aryl group, monovalent fluorine-containing hydrocarbon group and monovalent sulfur-containing hydrocarbon group, and the contents of the above metal atom, polyvalent hydrocarbon group and monovalent hydrocarbon group are adjusted to ensure that the refractive index value of the adhesive layer approximates to the refractive index values of the at least two optically transparent optical parts.

According to the present invention, secondly, the above objects and advantages of the present invention are attained by an adhesive composition (to be referred to as "first adhesive composition" hereinafter) comprising the following components (A1), (B1) and (C):

(A1) an organopolysiloxane having at least two alkenyl groups with 4 or less carbon atoms bonded to silicon atoms in one molecule;

(B1) an organohydrogenpolysiloxane having at least two hydrogen atoms bonded to silicon atoms in one molecule; and
(C) a platinum-based catalyst.

According to the present invention, thirdly, the above objects and advantages of the present invention are attained by an adhesive composition (to be referred to as "second adhesive composition" hereinafter) comprising the following components (A2), (B2), (C) and (D):

(A2) an organopolysiloxane having two alkenyl groups with 4 or less carbon atoms bonded to silicon atoms in one molecule and a molecular weight of 1,000 or more;
(B2) an organohydrogenpolysiloxane having at least two hydrogen atoms bonded to silicon atoms in one molecule and a molecular weight of 1,000 or more;
(C) a platinum-based catalyst; and
(D) at least one organic silicon compound selected from the group consisting of (D-1) an organic silicon compound having at least three alkenyl groups with 4 or less carbon atoms bonded to silicon atoms in one molecule and a molecular weight of less than 1,000 and (D-2) an organic cyclic silicon compound having at least three hydrogen atoms bonded to silicon atoms in one molecule and a molecular weight of less than 1,200.

Brief Description of the Drawings

Fig. 1 is a sectional view for explaining the bonding of optical fibers by means of an adhesive;
Fig. 2 is a sectional view for explaining the bonding of lenses by means of an adhesive;
Fig. 3 is a sectional view for explaining the bonding of a lens and an optical fiber by means of an adhesive;
Fig. 4 is a sectional view for explaining the bonding of a lens and a filter by means of an adhesive;
Fig. 5 is a sectional view for explaining the bonding of an optical fiber and an optical waveguide by means of an adhesive;
Fig. 6 is a sectional view for explaining the bonding of a lens and a lend holder by means of an adhesive;
Fig. 7 is a sectional view for explaining the bonding of a lens and a ferule by means of an adhesive; and
Fig. 8 is a sectional view for explaining the bonding of an optical fiber, an optical lens and a ferule by means of an adhesive.

Detailed Description of the Preferred Embodiments

The adhesive layer in the optical device of the present invention comprises a matrix which contains oxygen atoms and at least one type of metal atoms selected from the group consisting of silicon, titanium, zirconium, aluminum and germanium. At least a part of the metal atoms is bonded to other metal atom through a polyvalent hydrocarbon group having 2 to 8 carbon atoms and directly bonded to at least one monovalent hydrocarbon group selected from the group consisting of alkyl group, aryl group, monovalent fluorine-containing hydrocarbon group and monovalent sulfur-containing hydrocarbon group. Further, the contents of the above metal atom, polyvalent hydrocarbon group and monovalent hydrocarbon group are adjusted to ensure that the refractive index value of the adhesive layer approximates to the refractive index values of the at least two optically transparent optical parts.

As the above metal atoms forming the basic skeleton of a compound constituting the adhesive layer of the present invention are used at least one type of metal atoms (may be referred to as "network forming atoms" hereinafter) selected from the group consisting of silicon, titanium, zirconium, aluminum and germanium. The adhesive strength of the adhesive layer can be improved and the refractive index of the adhesive layer can be adjusted by using the metal atoms. For example, by using silicon atoms, an adhesive layer having excellent heat resistance, weatherability, humidity resistance and chemical resistance can be obtained. An adhesive layer having excellent heat resistance, weatherability, humidity resistance and chemical resistance and a large refractive index value can be obtained by forming the matrix using titanium, zirconium, aluminum or germanium alone or in combination with another element, for example, silicon. In the present invention, at least a part of the network forming atoms is bonded to other network forming atom(s) through a polyvalent hydrocarbon group having 2 to 8 carbon atoms as described above.

When the above network forming atoms are all silicon atoms and the above polyvalent hydrocarbon group is a divalent hydrocarbon group such as ethylene group ($-CH_2CH_2-$), the adhesive layer has a structure represented by the following formula (3) in which one silicon atom is bonded to the other silicon atom through the ethylene group.

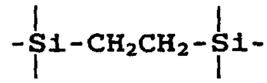

(3)

When the above network forming atoms are silicon atoms and the above polyvalent hydrocarbon group is a tervalent hydrocarbon group such as 1,2,3-propanetoluyl group, the adhesive layer has a structure represented by the following formula (4) in which one silicon atom is bonded to other silicon atoms through the 1,2,3-propanetoluyl group.

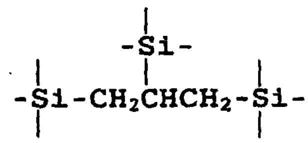

(4)

Thus, the adhesive layer of the present invention has a structure that network forming atoms are bonded together through a polyvalent hydrocarbon group, thereby making the elasticity of the adhesive layer higher and the brittleness thereof lower than the conventional structure that network forming atoms are bonded together through oxygen atoms, whereby a cohesive failure hardly occurs and adhesive strength increases.

In the adhesive layer of the present invention, at least a part of the above network forming atoms is directly bonded to at least one monovalent hydrocarbon group selected from the group consisting of alkyl group, aryl group, monovalent fluorine-containing hydrocarbon group and monovalent sulfur-containing hydrocarbon group. As this monovalent hydrocarbon group is existent in the matrix which comprises the above network forming atoms and oxygen atoms, it provides oxidation resistance, heat resistance and solvent resistance to the above matrix. Since the network forming atoms are bonded together through a monovalent hydrocarbon group, an adhesive material having excellent adhesive strength and environmental resistance (heat resistance, weatherability, humidity resistance and chemical resistance) can be obtained.

When the content of the polyvalent hydrocarbon group in the adhesive layer is too high, the molecular weight of the siloxane decreases relatively and the viscosity of the liquid composition lowers, resulting in reduced coating efficiency. On the contrary, when the content of the polyvalent hydrocarbon group is too low, the effect of increasing the adhesive strength of the adhesive layer becomes small, the molecular weight of the siloxane increases relatively, and the viscosity of the liquid composition becomes too high, resulting in reduced coating efficiency. When the content of the above monovalent hydrocarbon group in the adhesive layer is too high, the adhesion of the adhesive layer to glass lowers and when the content is too low, the oxidation resistance of the adhesive layer degrades. The adhesive layer contains the above polyvalent hydrocarbon group and the above monovalent hydrocarbon group in amounts of preferably 0.01 to 30 wt% and 30 to 80 wt%, more preferably 0.02 to 20 wt% and 40 to 70 wt%, respectively.

The adhesive layer of the present invention contains a polyvalent hydrocarbon group having 2 to 8 carbon atoms as described above. When the number of carbon atoms of the polyvalent hydrocarbon group is too large, the heat resistance of the adhesive layer deteriorates and the hydrophilic nature of the adhesive layer grows, whereby the adhesive layer becomes inferior in adhesion to the surface of glass or other optical part. The number of carbon atoms of the polyvalent hydrocarbon group must be 2 to 8, preferably 2 to 4. Divalent hydrocarbon groups having 2 to 4 carbon atoms include ethylene, trimethylene, tetramethylene, methylethylene, ethylethylene, dimethylethylene, vinylene, propenylene, butenylene, methylvinylene, ethylvinylene, dimethylvinylene and methylpropenylene. Tervalent hydrocarbon groups having 2 to 4 carbon atoms include 1,2,3-propanetoluyl and 1,2,4-butanetoluyl. Tetravalent hydrocarbon groups having 2 to 4 carbon atoms include 1,3-propanediyl-2-ylidene, 1,3-butanediyl-2-ylidene and 1,4-butanediyl-2-ylidene. Pentavalent hydrocarbon groups having 2 to 4 carbon atoms include 1,3-butanediyl-2,4-ylidene and 1,4-butanediyl-2,3-ylidene. The hydrogen atoms of the polyvalent hydrocarbon group having 2 to 4 carbon atoms may be substituted by deuterium or halogen such as fluorine, chlorine or bromine. An adhesive layer having high transmission of communication wavelengths of 1.55 μm and 1.3 μm is provided by substituting the hydrogen atoms by deuterium or halogen. Out of these, from the viewpoints of synthesis ease and heat resistance, ethylene, trimethylene and tetramethylene are preferred and ethylene is the most preferred.

The adhesive layer of the present invention further contains a monovalent hydrocarbon group. The monovalent hydrocarbon group is an alkyl group, aryl group, monovalent fluorine-containing hydrocarbon group or monovalent sulfur-containing hydrocarbon group. These monovalent hydrocarbon groups may be contained alone or in combination of two or more. Preferred examples of the alkyl group include alkyl groups having 1 to 18 carbon atoms such as methyl, ethyl, propyl, butyl, pentyl, hexyl, heptyl and octadecyl. Examples of the aryl group include phenyl, methylphenyl, ethylphenyl, dimethylphenyl, trimethylphenyl, biphenyl and naphthyl. Examples of the monovalent fluorine-containing hydrocarbon group include trifluoromethyl, pentafluoroethyl, heptafluoropropyl and trifluoropropyl. Examples of the monovalent sulfur-containing hydrocarbon group include thiol, sulfide, disulfide, polysulfide and sulfone.

The hydrogen atoms of the above monovalent hydrocarbon group may be substituted by deuterium or halogen such as fluorine, chlorine or bromine. An adhesive layer having high transmission of communication wavelengths of 1.55 μm and 1.3 μm is provided by substituting the hydrogen atoms by deuterium or halogen. Out of these, methyl, phenyl and trifluoromethyl are preferred from the viewpoints of synthesis ease, heat resistance and the adjustment of refractive index.

In the present invention, the contents of the above network forming atom, polyvalent hydrocarbon group and monovalent hydrocarbon group are adjusted to ensure that the refractive index value of the adhesive layer approximates to the refractive index values of the at least two optically transparent optical parts. Stated more specifically, when the refractive indices of the two adjacent optical parts are represented by $n_1$ and $n_2$ ($n_1 \geqq n_2$), respectively, the above adhesive layer interposed between the adjacent optical parts preferably has a refractive index $n_3$ represented by the following formula (1). More preferably, the adhesive layer has a refractive index $n_3$ represented by the following formula (2).

$$\sqrt{(n_1 \cdot n_2)}-((\sqrt{(n_1 \cdot n_2)}-n_2)/3)-0.05 \leqq n_3 \leqq \sqrt{(n_1 \cdot n_2)}+((n_1-\sqrt{(n_1 \cdot n_2)})/3)+0.05 \quad (1)$$

$$\sqrt{(n_1 \cdot n_2)}-((\sqrt{(n_1 \cdot n_2)}-n_2)/4)-0.03 \leqq n_3 \leqq \sqrt{(n_1 \cdot n_2)}+((n_1-\sqrt{(n_1 \cdot n_2)})/4)+0.03 \quad (2)$$

For example, when optical fibers are to be bonded together and the refractive indices of the optical fibers are 1.45, $1.40 \leqq n_3 \leqq 1.50$ according to the above formula (1) and $1.42 \leqq n_3 \leqq 1.48$ according to the above formula (2). Thus, an optical device having a small light propagation loss is obtained by adjusting the refractive index of the adhesive layer. As for optical parts other than optical fibers, such as lenses, filters, optical waveguides, diffraction gratings and optically active elements, an optical part having a small light propagation loss can be obtained by adjusting the refractive index of the adhesive layer.

A description is subsequently given of the method of forming the adhesive layer of the present invention.

As means of forming a bond between the above polyvalent hydrocarbon group and two or more network forming atoms, there are various methods: one in which a raw material compound having two or more network forming atoms bonded to a polyvalent hydrocarbon group is used, one in which a metal compound having a polymerizable reaction group directly bonded to a metal compound is reacted by a thermal/photo-polymerization method, and one in which a bond between a polyvalent hydrocarbon group and two or more network forming atoms is formed by a hydrosilylization reaction between an alkenyl compound and a hydrogenated silicon compound. Examples of the method in which a raw material compound having two or more network forming atoms bonded to a polyvalent hydrocarbon group is used include one in which the bond is formed by carrying out the hydrolysis/dehydration condensation reaction of bis(trialkoxysilyl)ethane, bis(trialkoxysilyl)propane or bis(trialkoxysilyl)butane as a raw material. Examples of the method in which the bond is formed through a reaction by a thermal/photo-polymerization method include one in which a vinyl trialkoxysilane or polydimethylsiloxane having a vinyl group at both terminals is mixed with an optically radical generating agent and polymerized by exposure to light to form the bond. Examples of the method in which the bond is formed by a hydrosilylization reaction between an alkenyl compound and a hydrogenated silicon compound include one in which a hydrosilylization reaction between a dimethylsiloxane having a vinyl group at both terminals and a hydrogenated dimethylsiloxane is carried out in the presence of a platinum catalyst. Out of these methods, the method in which the bond is formed by a hydrosilylization reaction between an alkenyl compound and a hydrogenated silicon compound is preferred because the reaction product is particularly excellent in heat resistance, the generation of bubbles by a reaction by-product can be prevented, and the shrinkage of the product is small in the curing step.

The adhesive composition of the present invention will be described hereinbelow. A description is first given of the first adhesive composition.

The first adhesive composition comprises the following components (A1), (B1) and (C):

(A1) an organopolysiloxane having at least two alkenyl groups with 4 or less carbon atoms bonded to silicon atoms in one molecule;
(B1) an organohydrogenpolysiloxane having at least two hydrogen atoms bonded to silicon atoms in one molecule; and
(C) a platinum-based catalyst.

Examples of the alkenyl group having 4 or less carbon atoms in the component (A1) include vinyl group, vinyloxy group, acryl group and acryloxy group having 2 carbon atoms; allyl group, allyloxy group, methacryl group

and methacryloxy group having 3 carbon atoms.

Examples of the above component (A1) include hydrogen-terminated polydimethylsiloxane compounds, methylhydrogensiloxane-dimethylsiloxane copolymer compounds, polymethylhydrogensiloxane compounds, polyethylhydrogensiloxane compounds, polyphenyl(dimethylhydrogensiloxy)siloxane hydrogen-terminated compounds, methylhydrogensiloxane-phenylmethylsiloxane copolymer compounds and methylhydrogensiloxane-octylmethylsiloxane copolymer compounds all of which have at least two of the above alkenyl groups. Out of these, preferred are dimethylsiloxane polymers having a vinyl group at both terminals represented by the following formula (5), copolymers of a vinyl methylsiloxane and a dimethylsiloxane represented by the following formula (6), copolymers of a diphenylsiloxane having a vinyl group at both terminals and a dimethylsiloxane represented by the following formula (7) and methyltrimethylpropylsiloxane dimethylsiloxanes having a vinyl group at both terminals represented by the following formula (8). The component (A1) preferably has a viscosity of 100 to 250,000 cS at 25° C from the viewpoint of coating work efficiency.

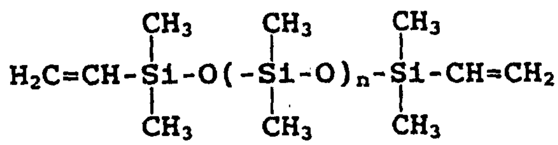

(5)

(n = 3 to 1,500)

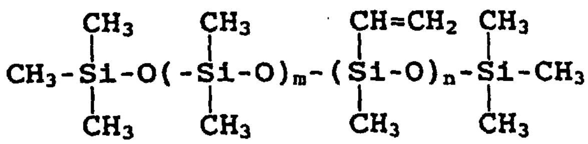

(6)

(m = 2 to 150, n = 2 to 150)

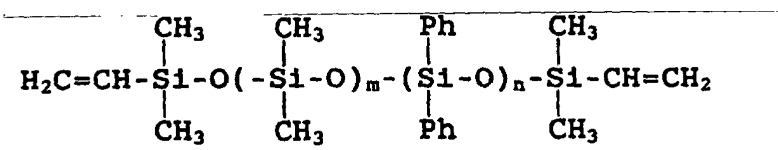

(7)

(m = 2 to 150, n = 2 to 300, pH = phenyl group)

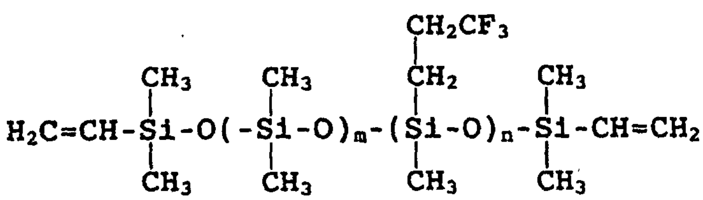

(8)

(m = 2 to 300, n = 2 to 150)

Examples of the organohydrogenpolysiloxane compound (component (B1)) having at least two hydrogen atoms bonded to silicon atoms in one molecule include hydrogen-terminated polydimethylsiloxane compounds represented by the following formula (9), methylhydrogensiloxane-dimethylsiloxane copolymer compounds represented by the following formula (10), polyphenyl(dimethylhydrogensiloxane)siloxane hydrogen-terminated compounds represented by the following formula (11), methyltrifluoropropylsiloxane(dimethylsiloxane) copolymers represented by the following formula (12), polymethylhydrogensiloxane compounds, polyethylhydrogensiloxane compounds and methylhydrogensiloxane-phenylmethylsiloxane copolymer compounds.

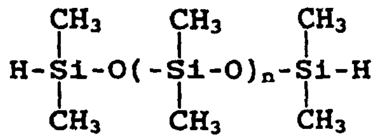

(9)

(n = 3 to 150)

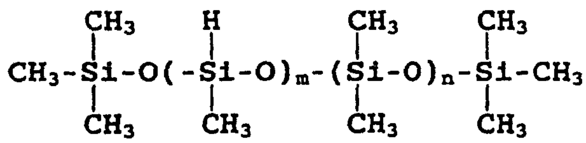

(10)

(m = 2 to 200, n = 2 to 200)

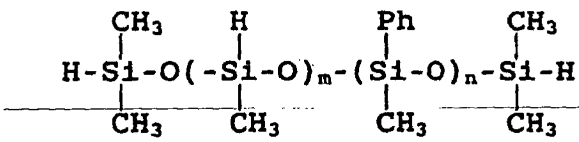

(11)

(m = 2 to 100, n = 2 to 50)

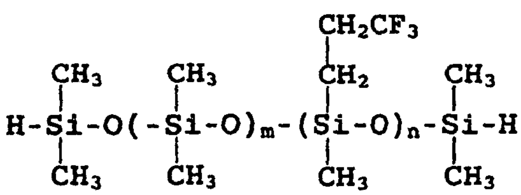

(12)

(m = 2 to 100, n = 2 to 50)

The platinum-based catalyst (component(C)) used in the first adhesive composition of the present invention is, for example, a platinum-siloxane complex, platinum-olefin complex, platinum-(β-diketone) complex or platinum-azo complex. Specifically, preferred examples of the platinum-based catalyst include platinum carbonylvinylmethyl complex, platinum-divinyltetramethyldisiloxane complex, platinum-cyclovinylmethylsiloxane complex and platinum-octylaldehyde/octanol complex.

As for the contents of the components (A1) and (B1) in the first adhesive composition, the number of hydrogen atoms contained in the component (B1) is preferably 0.4 to 6.0 times, more preferably 0.6 to 4.0 times the total number of alkenyl groups contained in the component (A1). The above platinum-based catalyst (component (C)) is preferably contained in an amount of 10 to 1,000 ppm based on the total weight of the components (A1) and (B1) so as to maintain suitable curing speed and provide suitable pot life.

The first adhesive composition of the present invention may contain a small amount of a tetraalkoxide (trialkoxide in the case of aluminum) of at least one network forming atom selected from the group consisting of silicon, titanium, zirconium, aluminum and germanium and a small amount of a condensate of one or more metal alkoxides thereof, besides the above components (A1), (B1) and (C). The generation of bubbles and the shrinkage of volume occur in this component by dehydration or dealcoholization in the curing reaction of the adhesive layer. When the content of this component in the first adhesive composition is 20 wt% or less, there will be no problem.

A description is subsequently given of the second adhesive composition of the present invention. The component (A2) constituting the second adhesive composition of the present invention is an organopolysiloxane having two alkenyl groups in the molecule each of which is directly bonded to a silicon atom and has 4 or less carbon atoms. The siloxane skeleton in the component (A2) may be linear, branched, cyclic or amixture thereof. The alkenyl group having 4 or less carbon atoms is preferably a vinyl group, vinyloxy group, allyl group, allyloxy group, acryl group, acryloxy group, methacryl group, methacryloxy group or 1-butenyl group from the viewpoint of synthesis ease. Out of these, a vinyl group is more preferred. Examples of the substituent bonded to a silicon atom other than the alkenyl group include alkyl groups such as methyl, ethyl, propyl, butyl, hexyl and dodecyl; aryl groups such as phenyl; aralkyl

groups such as 2-phenylethyl and 2-phenylpropyl, and substituted hydrocarbon groups such as chloromethyl and 3,3,3-trifluoropropyl. The component (A2) preferably has one and two or more substituents selected from the group consisting of methyl group, phenyl group and 3,3,3-trifluoropropyl group out of these because the composition is easily synthesized, easily achieves a degree of polymerization for obtaining required physical and mechanical properties after curing and has heat resistance and its refractive index can be adjusted. The above component (A2) is a base polymer for an addition reaction type curable polyorganosiloxane. Preferably, the alkenyl group is contained in an amount of 0.04 mol% or more of the total of all the organic groups bonded to silicon atoms in the component (A2). The viscosity of the component (A2) is not particularly limited but preferably 100 cS or more at 25°C. When flowability is required before curing, it is preferably 250,000 cS or less. When the molecular weight of the component (A2) is too low, its viscosity becomes low and coatability deteriorates thereby. Therefore, the component (A2) has a molecular weight of 1,000 or more. It has a molecular weight of preferably 2,000 or more, more preferably 5,000 or more.

Examples of the component (A2) include dimethylsiloxane polymers having a vinyl group at both terminal represented by the above formula (5) (n = 11 to 1,500), copolymers of a vinyl methylsiloxane and a dimethylsiloxane represented by the above formula (6) (m = 9 to 300, n = 2), copolymers of a diphenylsiloxane having a vinyl group at both terminals and a dimethylsiloxane represented by the above formula (7) (m= 11 to 150, n = 4 to 300), and methyltrimethylpropylsiloxane dimethylsiloxanes having a vinyl group at both terminals represented by the above formula (8) (m = 11 to 300, n = 5 to 150).

The polyorganohydrogensiloxane as the component (B2) is an organohydrogenpolysiloxane which is required to form the basic skeleton forming the adhesive layer through an addition reaction between it and the polyorganosiloxane containing alkenyl groups as the component (A2) and has at least two hydrogen atoms bonded to silicon atoms in one molecule and a molecular weight of 1,000 or more. A linear organohydrogenpolysiloxane is preferably used. Examples of the organic group bonded to a silicon atom other than the hydrogen atom in the component (B2) include alkyl groups such as methyl, ethyl, propyl, butyl, hexyl and dodecyl; aryl groups such as phenyl; aralkyl groups such as 2-phenylethyl and 2-phenylpropyl; and substituted hydrocarbon groups such as chloromethyl and 3,3,3-trifluoropropyl. Out of these, at least one organic group selected from the group consisting of methyl group, phenyl group and 3,3,3-trifluoropropyl group is preferred because the composition is easily synthesized, easily achieves a degree of polymerization for obtaining required physical and mechanical properties after curing and has heat resistance and its refractive index can be adjusted. When the molecular weight of the component (B2) is too low, its viscosity becomes low and coatability deteriorates thereby. Therefore, the component (B2) has a molecular weight of 1,000 or more.

Examples of the component (B2) include hydrogen-terminated polydimethylsiloxane compounds represented by the above formula (9) (n = 11 to 150), methylhydrogensiloxane-dimethylsiloxane copolymer compounds represented by the above formula (10), polyphenyl(dimethylhydrogensiloxane)siloxane hydrogen-terminated compounds represented by the above formula (11), methyltrifluoropropylsiloxane(dimethylsiloxane) copolymers represented by the above formula (12), polymethylhydrogensiloxane compounds, polyethylhydrogensiloxane compounds and methylhydrogensiloxane-phenylmethylsiloxane copolymer compounds.

Examples of the platinum-based catalyst (component (C)) used in the second adhesive composition of the present invention are the same as those listed for the first adhesive composition. The amount of the platinum-based catalyst is preferably 10 to 1,000 ppm based on the total weight of the components (A2), (B2) and (D) so as to maintain suitable curing speed and provide suitable pot life.

The component (D) used in the second adhesive composition of the present invention is added to improve the physical and mechanical strengths of the adhesive layer formed by an addition reaction between a polyorganosiloxane having alkenyl groups as the component (A2) and a hydrogenpolyorganosiloxane as the component (B2). Since the component (D) serves as a crosslinking agent for forming a 3-D network, it must have three or more reactive sites per molecule. The term "reactive sites" means sites which can provide a bond such as a covalent bond, coordination bond, ion bond, $\pi$-$\pi$ bond or dipole-dipole bond. Out of these, the component (D) preferably has sites capable of reacting with an alkenyl group and a hydrogen atom which are the reactive sites of the component (A2) and the component (B2), respectively. The component (D) is at least one organic silicon compound selected from the group consisting of (D-1) an organic silicon compound having at least three alkenyl groups with 4 or less carbon atoms bonded to silicon atoms in one molecule and a molecular weight of less than 1,000 and (D-2) an organic cyclic silicon compound having at least three hydrogen atoms bonded to silicon atoms in one molecule and a molecular weight of less than 1,200. These compounds have excellent heat resistance. When the molecular weight of the component (D) is too high, the viscosity of the component (D) becomes high and its coatability deteriorates thereby. Therefore, the component (D-1) has a molecular weight of less than 1,000 and the component (D-2) has a molecular weight of less than 1,200. Preferably, the component (D-1) has a molecular weight of 700 or less and the component (D-2) has a molecular weight of 1,100 or less. When the component (D-1) is used as the component (D), each of the alkenyl groups of the component (D-1) reacts and combines with one hydrogen atom contained in at least three molecules of the component (B) to play the key role of forming a 3-D network in the adhesive layer. Likewise, when the component (D-2) is used as the component (D), each of the hydrogen atoms of the component (D-2) reacts and combines with one alkenyl group contained

in at least three molecules of the component (A).

Examples of the component (D-1) include a siloxane compound, silane compound and silazane compound having three or more alkenyl groups in one molecule. What have three vinyl groups and a molecular weight of less than 1,000 include tris(vinyldimethylsiloxy)methylsilane (molecular weight: 346.72), tris(vinyldimethylsiloxy)phenylsilane (molecular weight: 408.78), trivinylchlorosilane (molecular weight: 144.67), trivinylethoxysilane (molecular weight: 154.37), trivinylmethoxysilane (molecular weight: 140.25), trivinylmethylsilane (molecular weight: 124.26), 1,3,5-trivinyl-1,1,3,5,5-pentamethyltrisiloxane (molecular weight: 272.57), trivinylsilane (molecular weight: 110.22), 1,3,5-trivinyl-1,3,5-trimethylcyclotrisilazane (molecular weight: 255.54), 1,3,5-trivinyl-1,3,5-trimethylcyclotrisiloxane (molecular weight: 258.50), methacryloxypropyltris(vinyldimethylsiloxy)silane (molecular weight: 458.85) and boron vinyldimethylsiloxide (molecular weight: 314.41). What have four or more vinyl groups and a molecular weight of less than 1,000 include tetrakis (vinyldimethylsiloxy)silane (molecular weight: 432.88), 1,1,3,3-tetravinyldimethyldisiloxane (molecular weight: 340.72), tetravinylsilane (molecular weight: 136.27), 1,3,5,7-tetravinyl-1,3,5,7-tetramethylcyclotetrasilazane (molecular weigh: 340.72), 1,3,5,7-tetravinyl-1,3,5,7-tetramethylcyclotetrasiloxane (molecular weight: 344.66), octavinyl-T8-silsequioxane (molecular weight: 633.04), pentavinylpentamethylcyclopentasiloxane (molecular weight: 430.82) and hexavinyldisiloxane (molecular weight: 234.45). What have three or more allyl groups, allyloxy groups or methacryloxy groups and a molecular weight of less than 1,000 include tetraallyloxysilane (molecular weight: 256.37), tetraallylsilane (molecular weight: 192.37) and tatrakis(2-methacryloxyethoxy)silane (molecular weight: 544.66)

The component (D-2) is, for example, a cyclic siloxane compound or cyclic silazane compound having three or more active hydrogen atoms in one molecule. Specific examples of the component (D-2) include hydro-T8-silsequioxane (molecular weight of 424.74, 8 hydrogen atoms), octakis(dimethylsiloxy)-T8-silsequioxane (molecular weight of 1,017.98, 8 hydrogen atoms), methylhydrocyclosiloxane (molecular weight of 240 to 360, 3 to 5 hydrogen atoms), pentamethylcyclopentasiloxane (molecular weight of 300.64, 5 hydrogen atoms), phenylhydrocyclosiloxane (molecular weight of 366.58 to 488.78, 3 to 4 hydrogen atoms), tetraethylcyclotetrasiloxane (molecular weight of 296.61, 4 hydrogen atoms), 1,3,5,7-tetraethyl-2,4,6,8-tetramethylcyclotetrasilazane (molecular weight of 348.78, 4 hydrogen atoms), 1,3,5,7-tetramethylcyclotetrasiloxane (molecular weight of 240.51, 4 hydrogen atoms) and 1,3,5-trimethylcyclotrisiloxane (molecular weight of 180.38, 3 hydrogen atoms). The number of hydrogen atoms in the parentheses is the number of hydrogen atoms bonded to silicon.

The content of the component (D) is preferably 0.1 to 40 wt% based on the total weight of the components (A2) and (B2) so as to improve the mechanical strength and environmental resistance of the adhesive layer, more preferably 0.5 to 25 wt%.

As for the contents of the components (A2), (B2), (D-1) and (D-2) in the adhesive composition, the number of hydrogen atoms contained in the components (B2) and (D-2) is 0.4 to 6.0 times, more preferably 0.6 to 4.0 times the total number of alkenyl groups contained in the components (A2) and (D-1). Out of these components (D), an oligomer having 3 to 8 silicon atoms is preferably used because (1) it has excellent compatibility with the above components (A2), (B2) and (C), (2) it has a high boiling point, thereby hardly generating bubbles in the adhesive layer and hardly discharging gas to the outside, and (3) it has high heat resistance. A cyclic oligomer having 3 to 8 silicon atoms such as 1,3,5-trivinyl-1,3,5-trimethylcyclotrisiloxane or 1,3,5,7-tetravinyl-1,3,5,7-tetramethylcyclotetrasiloxane is particularly preferably used as the component (D-1). A cyclic oligomer having 3 to 8 silicon atoms such as 1,3,5,7-tetraethylcyclotetrasiloxane (molecular weight of 296.61) or 1,3,5,7-tetramethylcyclotetrasiloxane is particularly preferably used as the component (D-2).

The adherend to be bonded by means of the first or second adhesive composition of the present invention may be an inorganic material such as glass, plastic or metal, organic material or organic-inorganic composite material. A primer layer may be formed on the surface to be contacted to the adhesive composition of the adherent in advance. A reduction in adhesion caused by delamination can be improved by the formation of a primer layer. Compounds for forming the primer layer include silane coupling agents such as sulfur-containing alkoxysilane compounds having at least one sulfur atom in one molecule and at least two alkoxy groups bonded to silicon atoms, nitrogen-containing alkoxysilane compounds having at least one nitrogen atom in one molecule and at least two alkoxy groups bonded to silicon atoms, epoxy-containing alkoxysilane compounds having at least one epoxy group in one molecule and at least two alkoxy groups bonded to silicon atoms, and hydrolysis/dehydrogenation condensation compounds thereof.

The first or second adhesive composition of the present invention provides an adhesive layer having excellent mechanical and physical strengths, environmental resistance and heat resistance and is advantageously used to bond together optical parts because its refractive index can be adjusted by selecting the organic group of its polysiloxane

skeleton. It may also be used to connect the optical paths of two or more optical parts and others and for applications other than optical parts.

The optical device of the present invention can be obtained by using the first or second adhesive composition of the present invention to bond together two or more optically transparent optical parts.

A description is subsequently given of optical parts. The optical parts include optical fibers, lenses, filters, optical waveguides, diffraction gratings and optically active elements. The optical fibers include single mode optical fibers and multi-mode optical fibers. The lenses include refractive index distribution lenses, spherical lenses, aspherical lenses and plane-convex lenses. The optical filters include narrow-band filters made of dielectric multi-layer films, band-pass filters and polarization filters. The optical waveguides include single-mode optical waveguides and multi-mode optical waveguides. These optical waveguides may have a Brag diffraction grating whose refractive index is modulated periodically. These optical parts may be made from the above various materials, such as glass materials, plastic materials and organic-inorganic composite materials.

The materials constituting the above optical parts preferably have a linear expansion coefficient of 1.5 x $10^{-5}$/° C or less. When the linear expansion coefficient of a matrix is larger than 1.5 x $10^{-5}$/° C, in the case of a plastic optical part having a high thermal expansion coefficient, such as polypropylene (9 to 15 x $10^{-5}$/°C), delamination may occur between the optical part and the adhesive layer in the heating step after the application of an adhesive and the adhesive layer may crack. Ordinary inorganic glass has a linear expansion coefficient of 1.5 x $10^{-5}$/° C or less. At least the bonding surface of an optical part is preferably made from an oxide. If the bonding surface is not made from an oxide, the adhesive strength of the adhesive layer lowers in the molding step and delamination may occur between the bonded surface and the adhesive layer. Preferred examples of the material of the matrix include oxide glass such as silicate-based glass, boric acid-based glass and phosphoric acid-based glass, quartz, ceramics, epoxy resins and glass fiber reinforced polystyrene. Although a metal is not bonded by the adhesive layer of the present invention as it is, if the surface of the metal is treated with an oxidizing agent, it can be used as a part to be bonded.

When these optical parts are assembled together, the optically transparent adhesive composition of the present invention is placed, filled or spread in the space between a first optical part and a second optical part and then cured to form a bonding portion having predetermined strength. As for the curing of the adhesive, an adhesive composition which cures in a few minutes can be obtained by increasing the amount of a curing catalyst. By reducing the amount of the curing catalyst, an adhesive composition having a pot life of a several hours can be obtained. The curing time can be shortened by heating as required. A reaction retardant and a curing accelerator may be each optionally added in an amount of 40 % or less, preferably 30 % or less of the total. The curing time can be controlled freely by adding a reaction retardant or a curing accelerator. Strength can be improved by adding a reinforcing agent. The reinforcing agent is an organic fine particle or inorganic fine particle. It is preferably an inorganic fine particle from the viewpoint of heat resistance. Examples of the inorganic fine particle include silica, titania, alumina, zirconia, ceria and calcium carbonate. The amount of the reinforcing agent is preferably 40 % or less, more preferably 20 % or less. The particle diameter of the reinforcing agent is preferably 1 μm or less, more preferably 0.5 μm or less so as to secure the transparency of the adhesive layer. It is preferred from the viewpoint of transparency that the refractive index of the reinforcing agent added should be made substantially equal to the refractive index of the matrix.

Examples

The following examples are given to further illustrate the present invention.

production of first raw material (raw materials A to I):

(raw material A)

0.039 mol (5 g) of dimethyldichlorosilane, 4 mols (72 g) of water and 1 mol (120.6 g) of dimethylvinylchlorosilane were mixed together and reacted at 60° C for 2 hours. Water and unreacted dimethylvinylchlorosilane were removed from the reaction mixture under reduced pressure and the obtained product was dehydrated to obtain a vinyl-terminated polydimethylsiloxane (viscosity: 1,000 cS, molecular weight: 28,000, vinyl group content: 0.18 to 0.26 wt%) (raw material A).

(raw material B)

1 mol (253.13 g) of diphenyldichlorosilane, 1 mol (129.3 g) of dimethyldichlorosilane, 4 mols (72 g) of water, and 1 mol (120.6 g) of dimethylvinylchlorosilane were mixed together and reacted at 60° C for 2 hours. Water and unreacted dimethylvinylchlorosilane were removed from the reaction mixture under reduced pressure and the obtained product was dehydrated to obtain a vinyl-terminated diphenylsiloxane-dimethylsiloxane copolymer (viscosity: 500 cS,

molecular weight: 9,500, phenyl group content: 18 to 22 wt%, vinyl group content: 0.37 to 0.42 wt%) (raw material B).

(raw material C)

1 mol (211.05 g) of methyltrifluoropropyldichlorosilane, 1 mol (129.03 g) of dimethyldichlorosilane, 4 mols (72 g) of water and 1 mol (120.59 g) of dimethylvinylchlorosilane were mixed together and reacted at 60° C for 2 hours. Water and unreacted dimethylvinylchlorosilane were removed from the reaction mixture under reduced pressure and the obtained product was dehydrated to obtain a vinyl-terminated methyltrifluoropropylsiloxane-dimethylsiloxane copolymer (viscosity: 500 cS, molecular weight: 9,500) (raw material C).

(raw material D)

5 g (0.0676 mol) of ethanol and an aqueous solution of 0.01 mol of hydrochloric acid dissolved in 10 mols of water were added to 5 g (0.0240 mol) of tetraethoxysilane and stirred at room temperature for 2 hours. 11.58 g (0.096 mol) of dimethylvinylchlorosilane which was 4 molar equivalents based on tetraethoxysilane was added to the obtained mixture and reacted at 60° C for 2 hours. Ethanol, water and unreacted dimethylvinylchlorosilane were removed from the reaction mixture under reduced pressure and the obtained product was dehydrated to obtain a product equivalent to "Vinyl Q Resin" (of Gerest Co., Ltd., viscosity of 5,000 cS) (raw material D).

(raw material E)

1.89 g (0.0189 mol) of acetylacetone, 5 g of isopropanol and an aqueous solution of 0.01 mol of hydrochloric acid dissolved in 4 mols of water were added to 5 g (0.0189 mol) of tetraisopropoxy titanium and stirred at room temperature for 2 hours. 9.12 g (0 .0756mol) of dimethylvinylchlorosilane which was 4 molar equivalents based on tetraisopropoxy titanium was added to the obtained mixture and reacted at 60° C for 2 hours. Isopropanol, acetylacetone, water and unreacted dimethylvinylchlorosilane were removed from the reaction mixture under reduced pressure to obtain a vinyl-terminated titanium oxide condensate (raw material E).

(raw material F)

2 molar equivalents of acetylacetone, 5 g of butanol and an aqueous solution of 0.01 mol of hydrochloric acid dissolved in 4 mols of water were added to 5 g (0.0130 mol) of tetrabutoxy zirconium and stirred at room temperature for 2 hours. 6.27 g (0.052 mol) of dimethylvinylchlorosilane which was 4 molar equivalents based on tetrabutoxy zirconium was added to the obtained mixture and reacted at 60° C for 2 hours. Isopropanol, acetylacetone, water and unreacted dimethylvinylchlorosilane were removed from the reaction mixture under reduced pressure to obtain a vinyl-terminated zirconium oxide condensate (raw material F).

(raw material G)

1 molar equivalent of acetylacetone, 5 g of butanol and an aqueous solution of 0.01 mol of hydrochloric acid dissolved in 4 mols of water were added to 5 g (0.0183 mol) of tri-sec-butoxy aluminum and stirred at room temperature for 2 hours. 8.83 g (0.0732 mol) of dimethylvinylchlorosilane which was 4 molar equivalents based on tri-sec-butoxy aluminum was added to the obtained mixture and reacted at 60°C for 2 hours. Isopropanol, acetylacetone, water and unreacted dimethylvinylchlorosilane were removed from the reaction mixture under reduced pressure to obtain a vinyl-terminated aluminum oxide condensate (raw material G).

(raw material H)

2 molar equivalents of water and 8.10 g (0.0672 mol) of dimethylvinylchlorosilane which was 4 molar equivalents based on diphenyldichlorogermane were added to 5 g (0.0168 mol) of diphenyldichlorogermane and reacted at 60° C for 2 hours. Water and unreacted dimethylvinylchlorosilane were removed from the reaction mixture under reduced pressure to obtain a vinyl-terminated germanium oxide condensate (raw material H).

(raw material I)

A raw material I was prepared in the same manner as the raw material A except that 1 mol of allyldimethylchlorosilane was used in place of 1 mol of dimethylvinylchlorosilane.

Optical parts:

(optical fiber)

A glass single-mode optical fiber (clad diameter: 120 µm, core diameter: 10 µm, refractive index of core: 1.46, refractive index of clad: 1.44) was prepared.

(lens)

A glass microlens ("Selfoc Microlens SMC18", diameter: 1.8 mm, length: 4.43 mm (0.23 pitch, refractive index of center portion: 1.590, distribution coefficient g: 0.326, 1 pitch (= 2 $\pi$/g): 19.27 mm) was prepared.

(curved lens)

A glass microlens ("Selfoc Microlens LBP20" of Nippon Sheet Glass Co., Ltd., diameter: 2.0 mm, length: about 1.5 mm (NA = 0.3)) was prepared.

(filter)

A band-pass filter having silicon oxide (refractive index: 1.46) and titanium oxide (refractive index: 2.1) deposited alternately on the surface of one side of a glass substrate (refractive index: 1.46) was prepared.

(optical waveguide)

An optically radical generating agent was added in an amount of 3 wt% based on the total weight to a liquid composition prepared by mixing together a silica raw material solution obtained by hydrolyzing acryloxypropyl trimethoxysilane with 0.1 N hydrochloric acid and a zirconia raw material obtained by treating zirconium tetrabutoxide with an equimolar amount of acrylic acid in an Si/Zr ratio of 1:1 to obtain a solution for forming an optical waveguide. This solution was applied to a silicon substrate having a 8 µm thick silica film formed thereon (a V-shaped groove for fixing an optical fiber was formed in an end portion) with a spin coater and heated at 80° C for 10 minutes and a waveguide portion was exposed to light from a high-pressure mercury lamp (10 mW for 15 sec) through a photomask. An unexposed portion was dissolved in isopropanol and removed. A liquid composition comprising silicon and zirconium in a ratio of 1.2:1 was applied to the above coating film and dried to obtain an embedded waveguide.

(waveguide type diffraction grating)

A Brag grating was formed on the above optical waveguide by a double-beam interference exposure method to obtain a waveguide type diffraction grating. The refractive index values of related portions of the above optical parts are shown in Table 3.

preparation of adhesive composition:

As shown in Table 1,
methylhydrogensiloxane-dimethylsiloxane copolymer J (viscosity: 25 to 35 cS, molecular weight: 2,000) or methylhydrogensiloxane-phenylmethylsiloxane copolymer K (viscosity: 100 cS) (copolymers J and K will be referred to as "second raw material" hereinafter) was added to the above first raw material to ensure that the number of hydrogen atoms contained in the second raw material should be 0.4 to 6.0 times the total number of alkenyl groups contained in the first raw material and a platinum catalyst (platinum-divinyltetramethyldisiloxane complex) was blended in an amount of 100 ppm based on the total weight to obtain adhesive compositions (1) to (17).

10 mg of each of the above adhesive compositions (1) to (17) was dropped on a first slide glass plate (25 mm x 50 mm x 1.2 mm), a second slide glass plate was placed upon the first slide glass plate immediately to spread the adhesive composition to a size of 25 mm x 25 mm, and the assembly was heated on a hot plate at 200° C for 15 minutes to observe the appearance of the adhesive layer between the first and second slide glass plates so as to check the generation of air bubbles and clouding. 1 g of the adhesive composition was placed in a glass sample bottle having a capacity of 3 ml and heated at 200° C for 30 minutes to measure its volumes before and after heating so as to evaluate its volume shrinkage factor (%) represented by 100 x (volume before heating - volume after heating)/(volume before heating). To evaluate the adhesive strength (cohesive failure rate) of the adhesive layer, the glass plates on both sides of the adhesive layer were pulled in opposite directions at a rate of 50 cm/min to measure adhesive (shear)

strength ($N/mm^2$). The results are shown in Table 2. In Examples (adhesive compositions (1) to (17)), the generation of bubbles was not observed during heating, volume shrinkage was small and adhesive strength was satisfactory. Rupture did not occur at the interface between the adhesive layer and the glass plate after the adhesion strength test but was seen in the interior of the adhesive layer.

Comparative Example 1

1.33 ml of polydimethylsiloxane (PDMS), 35.6 ml of methyltriethoxysilane (MTES) and 2.67 ml of phenyltrifluorosilane (PTFS) (molar ratio of 8:83:9) were added to a 100 ml sample tube, the tube was capped, and they were stirred at room temperature for 5 minutes. The resulting mixture was heated at 70°C, and 5.4 g of water was added and vigorously stirred for 30 minutes. The reaction mixture was first separated into two layers and became uniform after that. The cap was removed to expose the mixture to the atmosphere for 1 day and the solvent was naturally dried to obtain an adhesive composition (18). The adhesive composition was checked for the generation of bubbles and measured for its volume shrinkage and adhesive strength during the heat treatment like the above adhesive compositions (1-17). The results are shown in Table 2. As for the adhesive composition (18) shown in Comparative Example, bubbles were generated during heating, that is, air bubbles were generated continuously from the center to the end of the glass plate. Along with the generation of gas, volume shrinkage was observed and adhesive strength was unsatisfactory as well. No rupture occurred at the interface between the adhesive layer and the glass plate after the adhesive strength test but the rupture of the interior of the adhesive layer and the rupture of the adhesive layer itself caused by the existence of bubbles in the adhesive layer were observed. The generation of the above bubbles causes clouding and impairs the light transmission of the adhesive layer, resulting in an increased light transmission loss of the bonded optical part. The volume shrinkage of the adhesive layer changes the distance between optical parts to be bonded (focusing point shifts when a lens and another optical part are bonded together), thereby causing a light transmission loss or the internal distortion or cracking of the adhesive layer, whereby the optical properties of the optical part are easily impaired.

Table 1

| adhesive No. | adhesive | | | | | | |
|---|---|---|---|---|---|---|---|
| | first raw material | | | | second raw material | | ratio of the number of hydrogen atoms to the total number of alkenyl groups |
| | type | amount (g) | type | amount (g) | type | amount (g) | |
| Example | | | | | | | |
| 1 | A | 0.5 | - | - | J | 0.01 | 1.5 |
| 2 | B | 0.6 | - | - | J | 0.01 | 1.5 |
| 3 | C | 0.5 | - | - | J | 0.01 | 1.5 |
| 4 | D | 0.4 | - | - | J | 0.01 | 1.5 |
| 5 | E | 0.4 | - | - | J | 0.01 | 1.5 |
| 6 | F | 0.4 | - | - | J | 0.01 | 1.5 |
| 7 | G | 0.5 | - | - | J | 0.01 | 1.5 |
| 8 | H | 0.4 | - | - | J | 0.01 | 1.5 |
| 9 | A | 0.26 | B | 0.14 | J | 0.01 | 1.5 |
| 10 | A | 0.08 | B | 0.32 | K | 0.01 | 2.0 |
| 11 | B | 0.16 | C | 0.24 | J | 0.01 | 1.5 |
| 12 | B | 0.28 | D | 0.12 | J | 0.01 | 1.5 |
| 13 | A | 0.16 | E | 0.24 | J | 0.01 | 1.5 |
| 14 | A | 0.16 | F | 0.24 | J | 0.01 | 1.5 |
| 15 | A | 0.2 | G | 0.20 | J | 0.01 | 1.5 |
| 16 | A | 0.32 | H | 0.08 | J | 0.01 | 1.5 |
| 17 | I | 0.40 | - | - | J | 0.01 | 1.5 |

Table 2

| adhesive No. | adhesive layer | | | | | | |
|---|---|---|---|---|---|---|---|
| | content of polyvalent hydrocarbon group | content of monovalent hydrocarbon group | refractive index | appearance of adhesive layer bonded to glass | | shrinkage factor (%) | adhesive strength ($N/mm^2$) |
| | | | | bubbles | clouding | | |
| 1 | 0.2 | 40 | 1.42 | not seen | not seen | less than 0.1 | 2.3 |
| 2 | 0.2 | 45 | 1.55 | not seen | not seen | less than 0.1 | 2.4 |
| 3 | 0.2 | 45 | 1.39 | not seen | not seen | less than 0.1 | 2.2 |
| 4 | 3.0 | 35 | 1.43 | not seen | not seen | less than 0.1 | 2.1 |
| 5 | 5.0 | 40 | 1.60 | not seen | not seen | less than 0.1 | 2.2 |
| 6 | 3.0 | 40 | 1.58 | not seen | not seen | less than 0.1 | 2.3 |
| 7 | 2.0 | 30 | 1.57 | not seen | not seen | less than 0.1 | 2.1 |
| 8 | 0.5 | 50 | 1.59 | not seen | not seen | less than 0.1 | 2.0 |
| 9 | 0.2 | 40 | 1.46 | not seen | not seen | less than 0.1 | 2.2 |
| 10 | 0.2 | 45 | 1.52 | not seen | not seen | less than 0.1 | 2.3 |
| 11 | 0.2 | 45 | 1.49 | not seen | not seen | less than 0.1 | 2.1 |
| 12 | 0.2 | 45 | 1.46 | not seen | not seen | less than 0.1 | 2.3 |
| 13 | 0.2 | 45 | 1.53 | not seen | not seen | less than 0.1 | 2.1 |
| 14 | 0.2 | 45 | 1.53 | not seen | not seen | less than 0.1 | 2.2 |
| 15 | 0.2 | 45 | 1.49 | not seen | not seen | less than 0.1 | 2.2 |
| 16 | 0.2 | 45 | 1.46 | not seen | not seen | less than 0.1 | 2.1 |
| 17 | 0.2 | 45 | 1.40 | not seen | not seen | less than 0.1 | 2.1 |
| 18 | - | - | 1.43 | seen | seen | 60 | 0.3 |

Table 3

| optical part | refractive index |
|---|---|
| optical fiber (core) | 1.45 |
| lens (center portion) | 1.590 |
| optical waveguide (core) | 1.52 |
| optical filter | 1.46 |

Table 4

| No. | first optical part | second optical part | adhesive | output with air gap (dB·m) | output after curing of adhesive layer (dB·m) |
|---|---|---|---|---|---|
| Example | | | | | |
| 1 | optical fiber | optical fiber | 1 | 11.50 | 11.16 |
| 2 | optical fiber | optical fiber | 4 | 11.50 | 11.20 |
| 3 | optical fiber | optical fiber | 9 | 11.50 | 11.12 |
| 4 | lens | lens | 6 | 11.00 | 10.10 |
| 5 | lens | lens | 5 | 11.00 | 10.00 |
| 6 | lens | lens | 8 | 11.00 | 10.20 |
| 7 | lens | optical fiber | 10 | 11.70 | 11.30 |
| 8 | lens | optical fiber | 13 | 11.70 | 11.20 |
| 9 | lens | optical fiber | 14 | 11.70 | 11.40 |
| 10 | lens | optical filter | 7 | 20.40 | 19.20 |
| 11 | lens | optical filter | 2 | 20.40 | 19.60 |
| 12 | lens | optical filter | 12 | 20.40 | 19.40 |
| 13 | optical fiber | optical waveguide | 11 | 15.10 | 14.80 |
| 14 | optical fiber | optical waveguide | 15 | 15.10 | 14.70 |
| 15 | optical fiber | optical waveguide type diffraction grating | 16 | 15.10 | 14.80 |

Examples 1 to 3 (bonding optical fibers)

As shown in Fig. 1, 2 cm of a polymer film layer 4 was removed from one end portions of first and second single-mode glass optical fibers 1 and 21 described above (length of about 1 m), each having the polymer film layer 4, core portion 2 and clad portion 3, and the end portions were butted against each other through an about 25 μm long air gap to align their centers with each other on an optical bench (not shown). The positions of the optical fibers were adjusted such that the value of optical loss became minimum when laser light having a wavelength of 1,550 nm was input from the other end portion of the first optical fiber 1, let pass through the first fiber and output from the other end portion of the second optical fiber 21. In this state, the adhesive composition 5 (adhesive Nos. 1, 4 and 9) was applied to the position of the air gap between the two fibers and cured by leaving it at room temperature for 2 hours or by heating the applied portion with 110° C hot air from a drier for about 5 minutes. The initial value of optical loss (before the application of the adhesive) and the value of optical loss after the application and curing of the adhesive composition were measured and compared (shown in Example Nos. 1 to 3 of Table 4).

Examples 4 to 6

(bonding lenses)

As shown in Fig. 2, one end portions of two single-mode glass optical fibers 1 and 21 described above (each having a length of about 1 m, a polymer film layer 4 was removed from the one end portions), each having the polymer film layer 4, core portion 2 and clad portion 3, were bonded to one end portions of two glass microlenses 6 and 26 described above ("Selfoc Microlens SMC18") by an adhesive 25, respectively. The other end portions of the microlenses 6 and 26 were butted against each other to align their centers with each other on an optical bench (not shown). The positions of the lenses were adjusted such that the value of optical loss became minimum when laser light having a wavelength of 1,550 nm was input from the other end portion of the first optical fiber 1, let pass through the first microlens 6 and output from the other end portion of the second optical fiber 21 through an about 250 μm air gap and the second microlens 26. In this state, the adhesive composition 5 (adhesive Nos. 6, 5 and 8) was applied between the two lenses 6 and 26 and cured by leaving it at room temperature for 2 hours or by heating it with 110° C hot air from a drier for about 5 minutes. The initial value of optical loss (before the application of the adhesive) and the value of optical loss after the application and curing of the adhesive were measured and compared (Example Nos.4 to 6 of Table 4).

Examples 7 to 9

(bonding lens to optical fiber and manufacture of collimator module)

As shown in Fig. 3, one end portion of the optical fiber 1 was inserted into a glass ferrule 7 and fixed in a recessed portion at the end of the ferrule 7 by an adhesive 25. The centers of this ferrule with the optical fiber and the above glass microlens 6 were aligned with each ether on an optical bench such that the value of optical loss became minimum when laser light having a wavelength of 1,550 nm was input from the other end portion of the optical fiber 1 fixed in the ferrule and output to the outside from the microlens 6 through an about 250 μm air gap. The adhesive composition 5 (adhesive Nos. 10, 13 and 14) was applied between the lens 6 and the ferrule 7 and cured by leaving it at room temperature for 2 hours or by heating it with 110° C hot air from a drier to fabricate a collimator module. The initial value of optical loss (before the application of the adhesive) and the value of optical loss after the application and curing of the adhesive were measured and compared (Example Nos. 7 to 9 of Table 4).

Examples 10 to 12

(bonding lens to filter)

In Examples (4 to 6) for bonding lenses, a lens and a filter were bonded together as shown in Fig. 4 in the same manner as in Examples for bonding lenses except that the above lens 6 fitted with the above filter 8 was used in place of the first lens and the adhesive composition 5 (adhesive Nos. 7, 2 and 12) was used in place of the adhesive (adhesive Nos. 6, 5 and 8) (Example Nos. 10 to 12 of Table 4).

Examples 13 and 14

(bonding fiber to optical waveguide)

As shown in Fig. 5, 2 cm of a polymer film layer 4 was removed from one end portion of the above single-mode glass optical fiber 1 (length of about 1 m) having the polymer film layer 4, core portion 2 and clad portion 3, the optical fiber was fixed on the V-shaped groove of a waveguide by an adhesive 11, and the end portion of the optical fiber 1 was butted against one end portion of the optical waveguide core 9 of the above optical waveguide element 12 through an about 25 µm long air gap to align their centers with each other. The position of the optical fiber 1 was adjusted such that the value of optical loss became minimum when laser light having a wavelength of 1,550 nm was input from the other end portion of the optical fiber 1, let pass through the first fiber and output from the other end portion of the optical waveguide core. The adhesive composition 5 (adhesive Nos. 11 and 15) was applied to the position of the air gap between the end surface of the optical fiber 1 and the end surface of the optical waveguide core 9 and cured by leaving it at room temperature for 2 hours or by heating the applied portion with 110° C hot air from a drier for about 5 minutes. The initial value of optical loss before the application of the adhesive and the value of optical loss after the application and curing of the adhesive were measured and compared (Example Nos. 13 to 14 of Table 4).

Example 15

(bonding fiber to optical waveguide type diffraction grating)

A fiber and an optical waveguide type diffraction grating were bonded together in the same manner as in Examples 13 and 14 except that the abovewaveguide type diffraction grating was used in place of the waveguide element used in Examples 13 and 14 and the adhesive composition 5 (adhesive No. 16) was used in place of the adhesive composition 5 (adhesive Nos. 11 and 15) used in Examples 13 and 14 and the optical loss was measured in the same manner as in Examples 4 to 6. The results are shown in 15 of Table 4.

Example 16

Lenses were bonded together in the same manner as in Examples 4 to 6 except that the adhesive composition 5 (adhesive No. 4) was filled into the space surrounded by the lenses 6 and 26 and a ferrule 12 as shown in Fig. 7 in place of the adhesive composition 5 applied between the lenses 6 and 26. The optical loss was completely the same value as in Example 4.

Examples 17 to 22, Reference Example

Adhesive compositions were prepared from the following components. component (A) = vinyl-terminated polydimethylsiloxane (viscosity: 1,000 cS, molecular weight: 28,000, abbreviated as VPDMS) and vinyl-terminated diphenylsiloxane-dimethylsiloxane copolymer (viscosity: 5,000 cS, molecular weight: 35,300, abbreviated as VDPhS-DMS) component (B) = methylhydrogensiloxane-dimethylsiloxane copolymer (viscosity: 25 to 35 cS, molecular weight: about 2,000, abbreviated as MHS-DMS) and
methyltrifluoropropylsiloxane(dimethylsiloxane) copolymer (molecular weight: about 2,000, abbreviated as MTFPS)
component (C) = platinum-divinyltetramethyldisiloxane complex
component (D-1) =
1,3,5,7-tetravinyl-1,3,5,7-tetramethylcyclotetrasiloxane (molecular weight: 344.66, abbreviated as TVTMSTS), 1,3,5-trivinyl-1,3,5-trimethyltrisiloxane (molecular weight: 258.50, abbreviated as TVTMTS) and tetraallyloxysilane (molecular weight: 256.37, abbreviated as TAOS)
component (D-2) = 1,3,5,7-tetramethylcyclotetrasiloxane (molecular weight: 240.51, abbreviated as TMSTS) and 1,3,5,7-tetraethyl-2,4,6,8-tetramethylcyclotetrasilazane (molecular weight: 348.78, abbreviated as TETMSTS)
Adhesive compositions (N to U) were obtained by adding the above components to ensure that the number of hydrogen atoms contained in the component (B) and the component (D-2) should be 0.4 to 6.0 times the total number of alkenyl groups contained in the component (A) and alkenyl groups contained in the component (D-1) and adding and mixing 100 ppm of the component (C) based on the total weight of the components (A) to (D) as shown in Table 5.

(measurement of adhesive strength and others)

10 mg of each of the above adhesive compositions (P1 to U) was dropped on a first slide glass plate (25 mm x 50 mm x 1.2 mm), a second slide glass plate was placed upon the glass plate immediately to spread the adhesive

composition to a size of 25 mm x 25 mm, and the assembly was heated on a hot plate at 200° C for 15 minutes to observe the appearance of the adhesive layer between the first and second slide glass plates so as to check the generation of air bubbles and clouding. 1 g of the adhesive composition was placed in a glass sample bottle having a capacity of 3 ml and heated at 200° C for 30 minutes to measure its volumes before and after heating so as to evaluate its volume shrinkage factor (%) represented by 100 x (volume before heating - volume after heating)/(volume before heating). The above adhesive composition was spread between two slide glass plates in the same manner as described above and maintained at room temperature for 24 hours and then at room temperature, 100° C or 200° C for 1 hour as shown in the table. To evaluate the initial adhesive strength (cohesive failure rate) of the adhesive layer, the glass plates on both sides of the adhesive layer were pulled in opposite directions at a rate of 50 cm/min by a tensile tester to measure adhesive strength (shear strength) ($N/mm^2$). As a durability test, adhesive strength after the adhesive layer was boiled for 24 hours and adhesive strength after the adhesive layer was left in a thermostatic oven maintained at a temperature of 85° C and a relative humidity of 85 % for 500 hours (high-temperature high-humidity test) after the above boiling were measured in the same manner as described above.

The results of Examples 17 to 22 and Reference Example are shown in Tables 6 and 7. In Examples 17 to 22, the generation of bubbles was not observed during the heat treatment, the volume shrinkage was very small at less than 0.1 %, the initial adhesive strength and the adhesive strength after the boiling test were 5 $N/mm^2$ or more, and the adhesive strength after the high-temperature and high-humidity test was also satisfactory at 4 $N/mm^2$ or less. Rupture at the interface between the adhesive layer and the glass plate did not occur after the adhesion strength test but was seen in the interior of the adhesive layer. In contrast to this, in Comparative Example 2, adhesive strength, particularly adhesive strength after the boiling test and adhesive strength after the high-temperature and high-humidity test were unsatisfactory.

Table 5

| No. | adhesive | component (A) | | component (B) | | component (D) | | ratio of the number of hydrogen atoms to the total number of alkenyl groups |
|---|---|---|---|---|---|---|---|---|
| | | type | amount (wt%) | type | amount (wt%) | type | amount (wt%) | |
| Example | | | | | | | | |
| 17 | N | VPDMS | 90 | MHS-DMS | 7.5 | TVTMSTS | 2.5 | 0.9 |
| 18 | P | VPDMS | 80 | MHS-DMS | 15 | TVTMTS | 5 | 0.9 |
| 19 | Q | VDPhS-DMS | 90 | MHS-DMS | 7.5 | TVTMSTS | 2.5 | 1.0 |
| 20 | R | VPDMS | 90 | MHS-DMS | 7.5 | TETMSTS | 2.5 | 0.9 |
| 21 | S | VPDMS | 90 | MTFPS | 8.0 | TMSTS | 2.0 | 1.0 |
| 22 | T | VDPhS-DMS | 90 | MHS-DMS | 8.0 | TAOS | 2.0 | 1.2 |
| R.Ex. | U | VPDMS | 98 | MHS-DMS | 2.0 | -- | -- | 1.1 |

R.Ex.: Reference Example

Table 6

| No. | adhesive | refractive index | appearance of adhesive layer | | shrinkage factor (%) |
|---|---|---|---|---|---|
| | | | bubbles | clouding | |
| Example | | | | | |
| 17 | N | 1.45 | not seen | not seen | less than 0.1 |
| 18 | P | 1.44 | not seen | not seen | less than 0.1 |
| 19 | Q | 1.50 | not seen | not seen | less than 0.1 |
| 20 | R | 1.44 | not seen | not seen | less than 0.1 |
| 21 | S | 1.45 | not seen | not seen | less than 0.1 |
| 22 | T | 1.50 | not seen | not seen | less than 0.1 |
| R.Ex. | U | 1.43 | not seen | not seen | less than 0.1 |

R.Ex.: Reference Example

Table 7

| No. | adhesive | heat treatment temperature (°C) (1 hour) | shear strength (N/mm²) initial | after boiling test | after high-temperature high-humidity test |
|---|---|---|---|---|---|
| Example | | | | | |
| 17-1 | N | room temperature | 7 | 7 | 7 |
| 17-2 | N | 100 | 7 | 7 | 7 |
| 17-3 | N | 200 | 7 | 7 | 7 |
| 18-1 | P | room temperature | 6 | 6 | 6 |
| 18-2 | P | 100 | 6 | 6 | 6 |
| 18-3 | P | 200 | 8 | 8 | 8 |
| 19-1 | Q | 100 | 5 | 5 | 5 |
| 19-2 | Q | 200 | 5 | 5 | 5 |
| 20 | R | 200 | 5 | 5 | 4 |
| 21 | S | 200 | 6 | 5 | 5 |
| 22 | T | 200 | 5 | 5 | 4 |
| R.Ex. | U | 200 | 4 | 2 | 2 |

R.Ex.: Reference Example

Example 23

(bonding optical fibers)

As shown in Fig. 1, 2 cm of a polymer film layer 4 was removed from one end portions of first and second

single-mode glass optical fibers 1 and 21 described above (length of about 1 m), each having the polymer film layer 4, core portion 2 and clad portion 3, and the end portions were butted against each other through an about 25 μm long air gap to align their centers with each other on an optical bench (not shown in Figures) . The positions of the optical fibers were adjusted such that the value of optical loss became minimum when laser light having a wavelength of 1,550 nm was input from the other end portion of the first optical fiber 1, let pass through the first fiber and output from the other end portion of the second optical fiber 21. In this state, the adhesive composition N (5) was applied to the position of the air gap between the two fibers and cured by leaving it at room temperature for 2 hours or by heating the applied portion with 110° C hot air from a drier for about 5 minutes. The initial value of optical loss before the application of the adhesive and the value of optical loss after the application and curing of the adhesive composition were measured and the results are shown in Table 8.

Example 24

(bonding lenses)

As shown in Fig. 2, one end portions of two single-mode glass optical fibers 1 and 21 described above (each having a length of about 1 m, a polymer film layer 4 was removed from one end portions), each having the polymer film layer 4, core portion 2 and clad portion 3, were bonded to one end portions of two glass microlenses 6 and 26 described above (Celfox Microlens SMC18) by an adhesive 25. The other end portions of the microlenses 6 and 26 were butted against each other to align their centers with each other on an optical bench (not shown in Figures). The positions of the lenses were adjusted such that the value of optical loss became minimum when laser light having a wavelength of 1,550 nm was input from the other end portion of the first optical fiber 1, let pass through the first microlens 6 and output from the other end portion of the second optical fiber 21 through an about 250 μm air gap and the second microlens 26. In this state, the adhesive composition Q (5) was applied between the two lenses 6 and 26 and cured by leaving it at room temperature for 2 hours or by heating it with 110° C hot air from a drier for about 5 minutes. The initial value of optical loss (before the application of the adhesive) and the value of optical loss after the application and curing of the adhesive were measured and the results are shown in Table 8.

Example 25

(bonding lens to optical fiber, manufacture of collimator module)

As shown in Fig. 3, one end portion of the optical fiber 1 was inserted into a glass ferrule 7 and fixed in a recessed portion at the end of the ferrule 7 by an adhesive Q (25). The centers of this ferrule with the optical fiber and the above glass microlens 6 were aligned with each other on an optical bench such that the value of optical loss became minimum when laser light having a wavelength of 1,550 nm was input from the other end portion of the optical fiber 1 fixed in the ferrule and output to the outside from the microlens 6 through an about 250 μm air gap. The adhesive composition Q (5) was applied between the lens 6 and the ferrule 7 and cured by leaving it at room temperature for 2 hours or by heating it with 110° C hot air from a drier to fabricate a collimator module. The initial value of optical loss (before the application of the adhesive) and the value of optical loss after the application and curing of the adhesive were measured and the results are shown in Table 8.

Example 26

(bonding lens to filter)

A lens and a filter were bonded together as shown in Fig. 4 in the same manner as in Example 8 except that the above lens 6 fitted with the above filter 8 was used in place of the first lens and the adhesive composition P (5) was used in place of the adhesive Q in Example 24 for bonding lenses. The value of optical loss before the application of the adhesive and the value of optical loss after the application and curing of the adhesive were measured and the results are shown in Table 8.

Example 27

(bonding fiber to optical waveguide)

As shown in Fig. 5, 2 cm of a polymer film layer 4 was removed from one end portion of the above single-mode glass optical fiber 1 (length of about 1 m) having the polymer film layer 4, core portion 2 and clad portion 3, the

optical fiber was fixed on the V-shaped groove of a waveguide by an adhesive 11, and the end portion of the optical fiber 1 was butted against one end portion of the optical waveguide core 9 of the above optical waveguide element 14 through an about 25 μm long air gap to align their centers with each other. The position of the optical fiber 1 was adjusted such that the value of optical loss became minimum when laser light having a wavelength of 1,550 nm was input from the other end portion of the optical fiber 1, let pass through the first fiber and output from the other end portion of the optical waveguide core. The adhesive Q was applied to the position of the air gap between the end surface of the optical fiber 1 and the end surface of the optical waveguide core 9 and cured by leaving it at room temperature for 2 hours or by heating the applied portion with 110° C hot air from a drier for about 5 minutes. The initial value of optical loss before the application of the adhesive and the value of optical loss after the application and curing of the adhesive composition were measured and the results are shown in Table 8.

Example 28

(bonding fiber to optical waveguide type diffraction grating)

A fiber and an optical waveguide type diffraction grating were bonded together in the same manner as in Example 27 except that the above waveguide type diffraction grating was used in place of the waveguide element used in Example 27 and the adhesive composition T was used in place of the adhesive composition Q used in Example 27 and the optical loss was measured in the same manner as in Example 27. The results are shown in Table 8.

Example 29

(bonding lens to lens holder)

As shown in Fig. 6, the above curved lens 9 was fitted in a stainless lens holder 13 (SF20T of Nippon Sheet Glass Co., Ltd.), and the adhesive composition N (5) was filled into the space between the outer wall of the curved lens and the lens holder and cured by leaving it at room temperature for 2 hours or by heating it with 110° C hot air from a drier to bond the lens to the lens holder. The airtightness (initial airtightness) of this assembly before 24 hours of boiling and the airtightness thereof after boiling were evaluated. An airtightness test was made by reducing the pressure of a space on one side of the lens holder to 5 Pa or less, supplying He gas to the other space of the lens holder and measuring the amount of He gas leaking into the depressurized space through the adhesive layer between the curved lens and the lens holder with a gas detector. When the amount of the leaking He gas was less than 1.0 x $10^{-10}$ (Pa·$m^3$/s), airtightness (hermetic sealing properties) was evaluated as excellent (○), when the amount was the above value or more and less than 1.0 x $10^{-7}$ (Pa·$m^3$/s), airtightness was evaluated as moderate (Δ), and when the amount was 1.0 x $10^{-7}$ (Pa·$m^3$/s) or more, airtightness was evaluated as poor (×). As shown in Table 9, the initial airtightness and the airtightness after boiling were both excellent.

Example 30

(bonding lens to ferrule)

Lenses were bonded together in the same manner as in Example 24 except that the adhesive composition Q (5) was applied to and filled into the space surrounded by the lenses 6 and 26 and a stainless steel ferrule 12 as shown in Fig. 7 instead of applying the adhesive composition Q between the lenses 6 and 26. The airtightnesses tests of this assembly before and after the boiling test were evaluated in the same manner as in Example 29. As shown in Table 9, the initial airtightness and the airtightness after boiling were both excellent.

Example 31

(bonding optical fiber to lens through sleeve)

The above glass microlens was fitted into a quartz cylindrical holder, and the adhesive R was filled into the space between the lens and the holder and cured by leaving it at room temperature for 2 hours or by heating it with 110° C hot air from a driver. One end surface of the lens with the holder was polished to form an end surface inclined at 8° from a plane perpendicular to the optical axis, and an anti-reflection laminate consisting of a silica thin film and a titania thin film was formed on the end surface. A ferrule with a fiber was prepared in the same manner as in Example 24. The end surface of the ferrule with the fiber was inclined in the same manner as described above and an anti-reflection laminate was formed on the end surface. As shown in Fig. 8, the lens 16 with the holder 13 and the ferrule

17 with the fiber 22 were placed in a stainless steel (SUS) or zirconia cylindrical sleeve 15 so that the inclined end surfaces 22 and 23 having the anti-reflection laminates 18 and 19 formed thereon became parallel to each other at an interval d of 250 μm therebetween to align the centers of the lens 16 and the ferrule 17 with each other on an optical bench (not shown in Figures). The adhesive S (27) was filled into the space between the lens 16 with the holder and the sleeve 15 by a capillary phenomenon and cured by leaving it at room temperature for 2 hours or by heating it with 110° C hot air from a drier. At the same time, the adhesive S (28) was filled into the space between the ferrule 17 with the fiber and the sleeve 15 and cured in the same manner as described above to bond the optical fiber to the lens through the sleeve. This assembly was evaluated by the above airtightness test before and after a boiling test in the same manner as in Example 29. The amount of He gas before and after the boiling test was less than $1.0 \times 10^{-10}$ ($Pa \cdot m^3/s$). Thus, the initial airtightness and the airtightness after boiling were both excellent.

Comparative Example 2

A lens and a holder were bonded together in the same manner as in Example 29 except that the adhesive composition obtained in Comparative Example 1 was used in place of the adhesive composition N used in Example 29. This assembly was evaluated by the above airtightness test before and after a boiling test in the same manner as in Example 29. As shown in Table 9, the initial airtightness was excellent but the airtightness after boiling was lower than that of Example 29.

Table 8

| Example No. | first optical part | second optical part | adhesive | output with air gap (dB·m) | output after curing of adhesive (dB·m) |
|---|---|---|---|---|---|
| 23 | optical fiber | optical fiber | N | 11.5 | 11.2 |
| 24 | lens | lens | Q | 11.0 | 10.1 |
| 25 | lens | optical fiber | Q | 11.7 | 11.3 |
| 26 | lens | optical filter | P | 20.4 | 19.2 |
| 27 | optical fiber | optical waveguide | Q | 15.1 | 14.8 |
| 28 | optical fiber | optical waveguide type diffraction grating | T | 15.1 | 14.8 |

Table 9

| No. | first part | second part | adhesive | airtightness | |
|---|---|---|---|---|---|
| | | | | initial | after boiling test (24 hours) |
| Ex.29 | lens | lens holder | N | ○ | ○ |
| Ex.30 | lens | ferrule | Q | ○ | ○ |
| C.Ex.2 | lens | lens holder | C.Ex.1 | ○ | △ |

Ex.: Example    C.Ex.: Comparative Example

○: $<1.0\times10^{-10}$ ($Pa\cdot m^3/s$), △: $<1.0\times10^{-7}$ ($Pa\cdot m^3/s$)

As described above, according to the present invention, there are obtained an adhesive composition which has excellent adhesive strength and environmental resistance (heat resistance, weatherability, humidity resistance and chemical resistance) and a small light transmission loss while preventing gas generation and shrinkage in the step of curing and an optical device constructed by bonding optical parts by means of the adhesive composition.

## Claims

1. An optical device constructed by bonding together at least two optically transparent optical parts by an optically transparent adhesive layer, wherein the adhesive layer comprises a matrix containing oxygen atoms and at least one type of metal atoms selected from the group consisting of silicon, titanium, zirconium, aluminum and germanium, at least a part of the metal atoms is bonded to other metal atom through a polyvalent hydrocarbon group having 2 to 8 carbon atoms and directly bonded to at least one monovalent hydrocarbon group selected from the group consisting of alkyl group, aryl group, monovalent fluorine-containing hydrocarbon group and monovalent sulfur-containing hydrocarbon group, and the contents of the above metal atom, polyvalent hydrocarbon group and monovalent hydrocarbon group are adjusted to ensure that the refractive index value of the adhesive layer approximates to the refractive index values of the at least two optically transparent optical parts.

2. The optical device of claim 1, wherein when the refractive indices of two adjacent optical parts are represented by $n_1$ and $n_2$ ($n_1 \geqq n_2$), respectively, the adhesive layer interposed between the two optical parts has a refractive index $n_3$ represented by the following expression 1:

$$\sqrt{(n_1 \cdot n_2)}-((\sqrt{(n_1 \cdot n_2)}-n_2)/3)-0.05 \leqq n_3 \leqq \sqrt{(n_1 \cdot n_2)}+((n_1-\sqrt{(n_1 \cdot n_2)})/3)+0.05 \quad (1).$$

3. The optical device of claim 1, wherein when the refractive indices of two adjacent optical parts are represented by $n_1$ and $n_2$ ($n_1 \geqq n_2$), respectively, the adhesive layer interposed between the two optical parts has a refractive index $n_3$ represented by the following expression 2:

$$\sqrt{(n_1 \cdot n_2)}-((\sqrt{(n_1 \cdot n_2)}-n_2)/4)-0.03 \leqq n_3 \leqq \sqrt{(n_1 \cdot n_2)}+((n_1-\sqrt{(n_1 \cdot n_2)})/4)+0.03 \quad (2)$$

4. The optical device of any one of claims 1 to 3, wherein the adhesive layer contains 0.01 to 30 wt% of a polyvalent hydrocarbon group and 30 to 80 wt% of a monovalent hydrocarbon group.

5. The optical device of any one of claims 1 to 3, wherein the adhesive layer is a cured product of an adhesive composition comprising the following components (A1), (B1) and (C):

   (A1) an organopolysiloxane having at least two alkenyl groups with 4 or less carbon atoms bonded to silicon atoms in one molecule;
   (B1) an organohydrogenpolysiloxane having at least two hydrogen atoms bonded to silicon atoms in one molecule; and
   (C) a platinum-based catalyst.

6. The optical device of any one of claims 1 to 3, wherein the adhesive layer is a cured product of an adhesive composition comprising the following components (A2), (B2), (C) and (D):

   (A2) an organopolysiloxane having two alkenyl groups with 4 or less carbon atoms bonded to silicon atoms in one molecule and a molecular weight of 1,000 or more;
   (B2) an organohydrogenpolysiloxane having at least two hydrogen atoms bonded to silicon atoms in one molecule and a molecular weight of 1,000 or more;
   (C) a platinum-based catalyst; and
   (D) at least one organic silicon compound selected from the group consisting of (D-1) an organic silicon compound having at least three alkenyl groups with 4 or less carbon atoms bonded to silicon atoms in one molecule and a molecular weight of less than 1,000 and (D-2) an organic cyclic silicon compound having at least three hydrogen atoms bonded to silicon atoms in one molecule and a molecular weight of less than 1,200.

**7.** The optical device of claim 1, wherein the optical parts are optical fibers, lenses, filters, optical waveguides, diffraction gratings or optically active elements.

**8.** The optical device of claim 1, wherein one of the adjacent optical parts is an optical fiber and the other is a lens, filter or optical waveguide.

**9.** The optical device of claim 1, wherein the adjacent optical parts are both optical fibers.

**10.** The optical device of claim 1, wherein the optical parts are made from glass, plastic or organic-inorganic composite material.

**11.** The optical device of claim 1, wherein the optical parts are made from glass.

**12.** An adhesive composition comprising the following components (A1), (B1) and (C):

(A1) an organopolysiloxane having at least two alkenyl groups with 4 or less carbon atoms bonded to silicon atoms in one molecule;
(B1) an organohydrogenpolysiloxane having at least two hydrogen atoms bonded to silicon atoms in one molecule; and
(C) a platinum-based catalyst.

**13.** The adhesive composition of claim 12, wherein the component (A1) has a viscosity of 100 to 250,000 cS at 25° C.

**14.** The adhesive composition of claim 12 or 13, wherein the number of hydrogen atoms contained in the component (B1) is 0.4 to 6.0 times the total number of alkenyl groups contained in the component (A1), and the component (C) is contained in an amount of 10 to 1,000 ppm based on the total weight of the components (A1) and (B1).

**15.** An adhesive composition containing the following components (A2), (B2), (C) and (D):

(A2) an organopolysiloxane having two alkenyl groups with 4 or less carbon atoms bonded to silicon atoms in one molecule and a molecular weight of 1,000 or more;
(B2) an organohydrogenpolysiloxane having at least two hydrogen atoms bonded to silicon atoms in one molecule and a molecular weight of 1,000 or more;
(C) a platinum-based catalyst; and
(D) at least one organic silicon compound selected from the group consisting of (D-1) an organic silicon compound having at least three alkenyl groups with 4 or less carbon atoms bonded to silicon atoms in one molecule and a molecular weight of less than 1,000 and (D-2) an organic cyclic silicon compound having at least three hydrogen atoms bonded to silicon atoms in one molecule and a molecular weight of less than 1,200.

**16.** The adhesive composition of claim 15, wherein the number of hydrogen atoms contained in the components (B2) and (D-2) is 0.4 to 6.0 times the total number of alkenyl groups contained in the component (A2) and alkenyl groups contained in the component (D-1), the component (C) is contained in an amount of 10 to 1,000 ppm based on the total weight of the components (A2), (B2) and (D), and the component (D) is contained in an amount of 0.1 to 40 wt% based on the total weight of the components (A2) and (B2).

**17.** The adhesive composition of claim 15 or 16, wherein the component (D) is an oligomer having 3 to 8 silicon atoms.

**18.** The adhesive composition of claim 15 or 16, wherein the component (D-1) is boron vinyldimethylsiloxide, hexavinyldisiloxane, methacryloxypropyl tris(vinyldimethylsiloxy)silane, octavinyl-T8-silsequioxane, pentavinylpentamethylcyclopentasiloxane, tetraallyloxysilane, tetraallylsilane, tetrakis(2-methacryloxyethoxy)silane, tetrakis(vinyldimethylsiloxy)silane, 1,1,3,3-tetravinyldimethyldisiloxane, tetravinylsilane, 1,3,5,7-tetravinyl-1,3,5,7-tetramethylcyclotetrasilazane, 1,3,5,7-tetravinyl-1,3,5,7-tetramethylcyclotetrasiloxane, tris(vinyldimethylsiloxy)methylsilane, tris(vinyldimethylsiloxy)phenylsilane, trivinylchlorosilane, trivinylethoxysilane, trivinylmethoxysilane, trivinylmethylsilane, 1,3,5-trivinyl-1,1,3,5,5-pentamethyltrisiloxane, trivinylsilane, 1,3,5-trivinyl-1,3,5-trimethylcyclotrisilazane or 1,3,5-trivinyl-1,3,5-trimethylcyclotrisiloxane.

**19.** The adhesive composition of claim 15 or 16, wherein the component (D-2) is hydro-T8-silsequioxane, octakis (dimethyloxy)-T8-silsequioxane, methylhydrocyclosiloxane, pentamethylcyclopentasiloxane, phenylhydrocyclosiloxane, 1,3,5,7-tetramethylcyclotetrasiloxane, 1,3,5,7-tetraethylcyclotetrasiloxane or 1,3,5,7-tetraethyl-2,4,6,8-tetramethylcyclotetrasilazane.

**20.** The adhesive composition of claim 15 or 16, wherein the component (D-1) is 1,3,5-trivinyl-1,3,5-trimethylcyclotrisiloxane or 1,3,5,7-tetravinyl-1,3,5,7-tetramethylcyclotetrasiloxane and the component (D-2) is 1,3,5,7-tetraethylcyclotetrasiloxane or 1,3,5,7-tetramethylcyclotetrasiloxane.

**21.** The adhesive composition of claim 15, wherein the component (A2) has a viscosity of 100 to 250,000 cS at 25° C.

F I G. 1

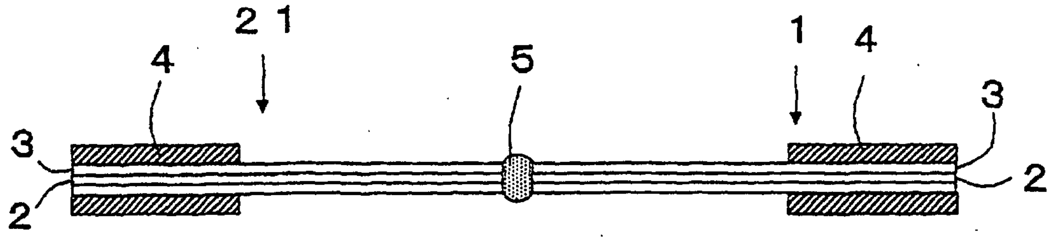


F I G. 2

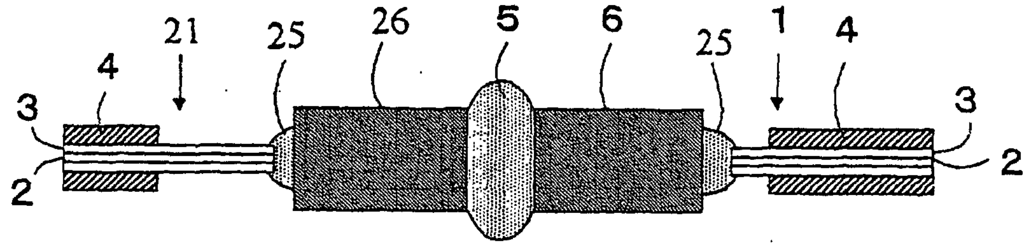


F I G. 3

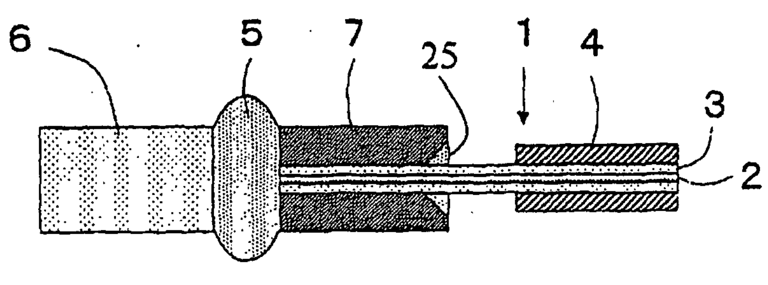

F I G. 4

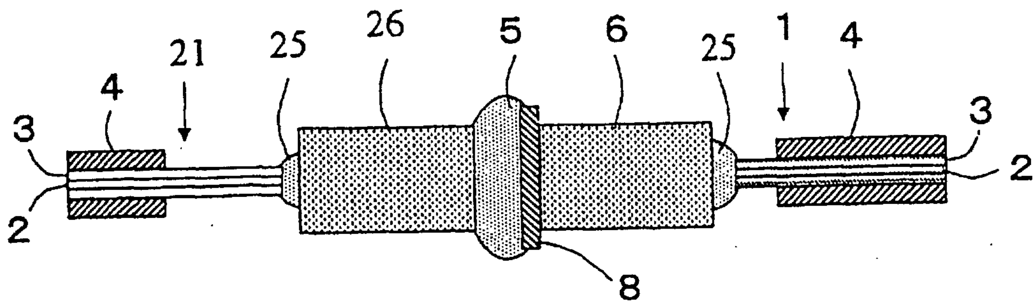


F I G. 5

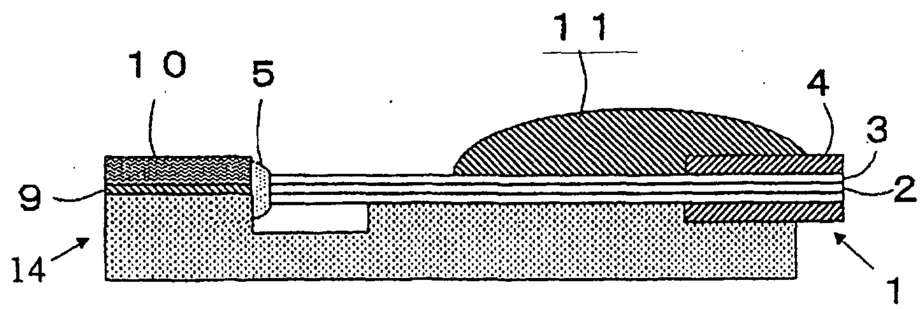

F I G. 6

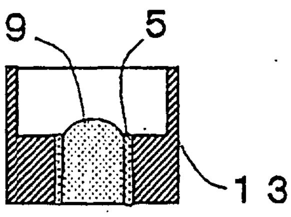


F I G. 7

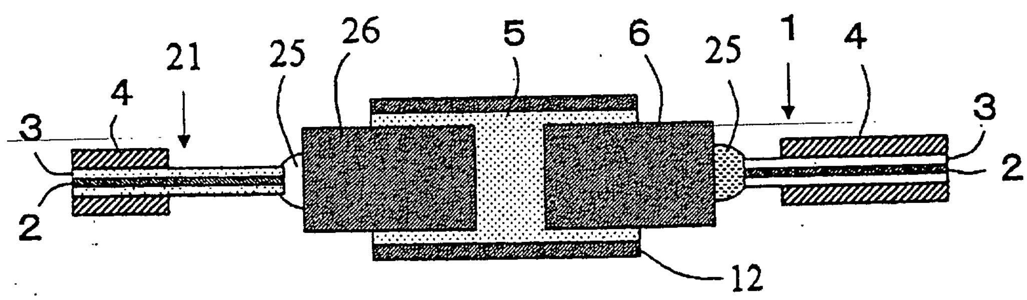

FIG. 8

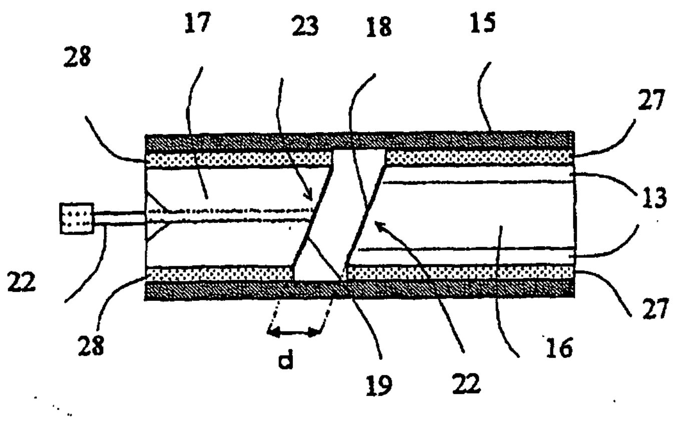

# INTERNATIONAL SEARCH REPORT

International application No.
PCT/JP01/07015

**A. CLASSIFICATION OF SUBJECT MATTER**
Int.Cl[7] C09J183/14, 183/07, 183/05, 185/00, G02B3/00, 6/26, 6/30, 7/00, C03C27/10

According to International Patent Classification (IPC) or to both national classification and IPC

**B. FIELDS SEARCHED**

Minimum documentation searched (classification system followed by classification symbols)
Int.Cl[7] C09J183/14, 183/07, 183/05, 185/00, G02B3/00, 6/26, 6/30, 7/00, C03C27/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 62-39660 A (Toshiba Silicone Co., Ltd.), 20 February, 1987 (20.02.87), Claims (Family: none) | 1-21 |
| Y | US 4978696 A (Dow Corning Corporation), 18 December, 1990 (18.12.90), Claims & JP 3-121163 A | 1-21 |
| Y | JP 62-297370 A (Canon Inc.), 24 December, 1987 (24.12.87), Claims & US 5683480 A | 1-21 |
| Y | EP 202542 A1 (Sumitomo Electric Industries, Limited), 26 November, 1986 (26.11.86), Claims & JP 61-275330 A & JP 61-254624 A | 1-21 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 October, 2001 (15.10.01) | 23 October, 2001 (23.10.01) |
| Name and mailing address of the ISA/ Japanese Patent Office | Authorized officer |
| Facsimile No. | Telephone No. |

Form PCT/ISA/210 (second sheet) (July 1992)